# EUROPEAN PATENT SPECIFICATION

(11) **EP 3 369 322 B1**
(45) Date of publication and mention of the grant of the patent: **15.09.2021**
(21) Application number: 18158412.9
(22) Date of filing: 23.02.2018
(51) Int. Cl.: A22B 3/08, A22B 3/00

(54) **METHOD FOR GASSING POULTRY AND DEVICE FOR USE WITH THIS METHOD**
VERFAHREN ZUM BEGASEN VON GEFLÜGEL UND VORRICHTUNG ZUR VERWENDUNG DIESES VERFAHRENS
PROCÉDÉ POUR GAZER DES VOLAILLES ET DISPOSITIF À UTILISER AVEC CE PROCÉDÉ

(30) Priority: 01.03.2017 NL 2018448
(43) Date of publication of application: 05.09.2018
(73) Proprietor: P. van Eck Beheer B.V., 5694 NM Son en Breugel (NL)
(72) Inventor: VAN ECK, Paulus Anthonius Cornelis, 5694 NM Son en Breugel (NL)
(74) Representative: Algemeen Octrooi- en Merkenbureau B.V.

(56) References cited:
- EP-A1- 2 674 032
- WO-A2-2007/120973
- US-A1- 2015 216 190
- US-B2- 9 125 423
- M. A. GERRITZEN ET AL: "Multistage carbon dioxide gas stunning of broilers", POULTRY SCIENCE, vol. 92, no. 1, 1 January 2013 (2013-01-01), pages 41-50, XP055486669, Oxford ISSN: 0032-5791, DOI: 10.3382/ps.2012-02551
- "COUNCIL REGULATION (EC) No 1099/2009", , 18 November 2009 (2009-11-18), XP055249744, Retrieved from the Internet: URL:http://eur-lex.europa.eu/LexUriServ/Le xUriServ.do?uri=OJ:L:2009:303:0001:0030:EN :PDF [retrieved on 2016-02-12]

## Description

The present invention relates to a method for gassing poultry.

The present invention is aimed at gassing poultry on a poultry farm, in which poultry is kept in a shed space. In the present description, the term poultry is understood to include chickens, turkeys, guinea fowl, geese, ducks, ostriches, emus, pigeons and quails. In the present description, the term poultry farm is understood to mean every commercial form of keeping poultry, including uses for laying birds and for meat birds, in particular uses in which large numbers of poultry are kept in a shed space.

On such poultry farms, the poultry which is being kept in the shed space may become sick. In particular with highly contagious diseases, such as for example bird flu, it is sometimes necessary to dispose of the birds which are present on the poultry farm. This means that all the birds which are present are killed and removed. Disposing of the birds may be effected, for example, by electrocution, by immersing animals in carbon (di)oxide or by gassing them in the animal shed.

When gassing animals in the animal shed, use is made of liquid carbon dioxide (CO₂). The liquid carbon dioxide is brought to the poultry farm by means of bulk trailers, in which the CO₂ is kept at a temperature in the range from approximately -56°C to -25°C. Usually, the shed space is closed off and liquid CO₂ is introduced into the closed-off shed space by means of feed nozzles. In this case it is important for the liquid CO₂ to be introduced at a pressure which is higher than 5.2 bar, preferably 8 bar, because, at a lower pressure, the liquid carbon dioxide will turn into solid ice and everything will freeze up. WO2007/120973 A2 discloses a process and apparatus for depopulating groups of animals.

Under normal circumstances, air is composed of approximately 21% oxygen (O₂), 78% nitrogen and 1% miscellaneous. The introduction of large amounts of liquid CO₂ changes the composition of the air mixture to a mixture in which the O₂ content is so low that the birds will suffer total oxygen depletion (anoxia). As a result thereof, the birds will die, following which they may be disposed of.

In practice, it has been found that the currently known method can be improved. Thus, it has been found that birds regularly survive the gassing. Usually, the birds even exhibit visible escape behaviour, and piles of birds are found in the shed space which may contain animals which are still alive. Overall, the known method results in stress in the birds due to the low temperature of the carbon dioxide, as a consequence of which the welfare of the animals is relatively low. Furthermore, the drop in temperature and frost may cause damage to equipment in the animal shed (such as for example water pipes and the like).

There is therefore a need for a method for gassing poultry which is more effective, which improves animal welfare of the birds and which prevents damage.

With this aim in mind, the present invention provides a method for gassing poultry, poultry according to claim 1, in which the poultry is present in a shed space for keeping poultry and in which use is made of liquid carbon dioxide. The method according to the present invention comprises the steps of converting the liquid carbon dioxide into gaseous carbon dioxide, and subsequently introducing the gaseous carbon dioxide into the shed space. In this way, a carbon dioxide-containing gas is introduced into the shed space. The gaseous carbon dioxide may form part of a gas mixture. According to the invention, the method comprises the step of supplying a low-oxygen gas mixture, and in particular a carbon dioxide-containing gas mixture. Preferably, the supplied carbon dioxide-containing gas mixture comprises at least 20% to 100% carbon dioxide. in order to obtain a low-oxygen gas mixture, the supplied carbon dioxide-containing gas mixture may then, for the remainder, substantially comprise nitrogen or another gas. In this case, the expression low-oxygen is understood to mean less than 5 vol% oxygen, such as for example less than 1 vol% oxygen.

The method of animal shed gassing according to the present invention, in which gaseous CO₂ rather than liquid CO₂ is introduced into the shed space, results in a significant improvement in the effectiveness of the gassing process and in the animal welfare of the poultry during the gassing, as the birds no longer seem to suffer from stress. When using the method according to the present invention, it has been found that the animals are evenly distributed over the entire space, have not exhibited escape behaviour and have lost consciousness on the spot. Thus, the present invention provides a more effective and animal-friendly method for gassing poultry, as a result of which the object of the present invention is achieved.

Further advantageous embodiments will be explained in more detail below.

In an embodiment, converting the liquid carbon dioxide into the gaseous carbon dioxide comprises the step of evaporating the liquid carbon dioxide. In an embodiment, the evaporation may be effected by means of an evaporation unit which is configured for the purpose. This evaporation unit comprises in particular an inlet and an outlet, in which the evaporation unit is configured to convert liquid carbon dioxide into gaseous carbon dioxide.

With the method according to the present invention, the conversion of the liquid carbon dioxide into the gaseous carbon dioxide may take place outside the shed space. It has been found that the conversion is relatively noisy. The noise may cause a startle response in the birds, such as running among themselves and diving onto each other in heaps. This reduces the effectiveness. By allowing the conversion to be performed outside the animal shed, at a distance from the shed space, the noise will be less audible, as a result of which the startle response of the birds is reduced or is even entirely avoided. Tests conducted by the applicant show that birds are found evenly distributed over the animal shed after having used the method according to the present invention, thus proving that the animals have not suffered a startle response.

In an embodiment, the method comprises the step of conditioning the gaseous carbon dioxide, in particular bringing the gaseous carbon dioxide to a desired temperature. In particular, the desired temperature may be adapted to an average animal shed temperature, preferably in which the desired temperature is equal to the average animal shed temperature. Certainly when this conditioning step takes place outside the animal shed and conditioned gaseous carbon dioxide is thus introduced into the shed space, there will be no, or hardly any, heat exchange with the gaseous carbon dioxide in the animal shed. As a result thereof, the temperature in the animal shed will not be affected, or hardly, and not drop, as is the case with the prior art. The result is that the birds in the animal shed are not subjected to a sudden change in temperature, which would result in a startle response by the animals. Since the temperature hardly changes, if at all, the animals will remain calmer and will thus fall asleep in a calm and relatively animal-friendly way.

The desired temperature for introducing the gaseous carbon dioxide is between 10°C and 35°C, in particular between 15°C and 30°C, such as for example 20°C. At these temperatures, the birds will not suffer a startle response when the gaseous carbon dioxide is introduced into the shed space.

The gaseous carbon dioxide is introduced into the shed space at a pressure in the range from 2 bar to 4 bar, preferably at a pressure in the range from 2 bar to 3 bar. Introducing the gaseous carbon dioxide into the shed space at a relatively low pressure, preferably in the range from 2 bar to 3 bar, is attractive in order to prevent, or at least greatly reduce, the noise which accompanies introducing gaseous carbon dioxide into the shed space under pressure. This is advantageous in order to prevent birds from trying to escape or at least greatly reduce the number of birds exhibiting escape behaviour.

In an embodiment of the method according to the present invention it is advantageous if the method furthermore comprises the step of bringing and/or keeping the shed space at a further desired temperature, in which the further desired temperature is between 10°C and 35°C, preferably in which the further desired temperature is substantially equal to the desired temperature. Keeping the shed space at a certain temperature has the effect that the birds do not notice, or only notice at a relatively late stage, that the composition of the atmosphere in the space has changed. At the point in time when the birds might notice that the atmosphere has changed due to an increase in the carbon dioxide content, the birds in the shed space will already have breathed in gaseous carbon dioxide, leading to an acceleration in their breathing, with a renewed intake leading to a reduction in consciousness.

It is advantageous if the gaseous carbon dioxide is distributed over the volume of the shed space in the shed space substantially evenly. This is particularly advantageous in order to gas the birds relatively quickly and with relatively limited suffering. A relatively even distribution is furthermore advantageous in order to prevent the poultry from escaping to a location with a relatively high oxygen content, or at least greatly reduce the number of birds exhibiting escape behaviour.

In a particularly practical embodiment of the method, the shed space is formed by an aviary barn, in which the poultry can move freely through the shed space in the vertical direction. In an aviary barn, the birds are free to move through the shed space, with dwelling and resting areas being provided for the birds at different levels in the shed space. In an embodiment of such an aviary barn, various levels are provided in the shed space which are in open communication with each other, so that the poultry can move freely between the different levels. In an aviary barn, it is particularly advantageous to ensure an even distribution of the gaseous carbon dioxide, so that the birds die uniformly on each level or at each height above the shed floor. In practice, it is conceivable for the shed space of an aviary barn to have a height in the range from 5 to 10 metres.

It is advantageous if the method according to the present invention comprises the step of removing the gaseous carbon dioxide from the shed space. This is advantageous in order to prevent, or at least greatly reduce, any risks to workers when entering the shed space. During the step of removing the gaseous carbon dioxide from the shed space, the shed space is preferably filled with air or air containing disinfectant.

In this case, it is advantageous if the gaseous carbon dioxide is removed from the shed space after a time period in the range from 30 minutes to 2 hours after the introduction of the gaseous carbon dioxide. This is advantageous for gassing poultry in an effective, quick and inexpensive way.

In this case, it is advantageous if the gaseous carbon dioxide is removed from the shed space after a time period in the range from 31 minutes to 60 minutes after the introduction of the gaseous carbon dioxide. This is advantageous for gassing poultry in an effective, quick and inexpensive way.

According to an aspect of the present disclosure not covered by the claimed invention and present for illustration purposes only, a device is provided for use with the method according to the present invention. The device comprises an evaporation unit with an inlet and an outlet, in which the evaporation unit is configured to convert liquid carbon dioxide into gaseous carbon dioxide. In this case, the device is configured to supply the carbon dioxide to the shed space and introduce the gaseous carbon dioxide into the shed space. The advantages of such a device have already been explained above by means of the method according to the present invention.

In an embodiment, the device comprises a conditioning unit for bringing the gaseous carbon dioxide to a desired temperature. The liquid carbon dioxide has a temperature of approximately -25°C. During evaporation in the evaporation unit, the liquid carbon dioxide will heat up slightly. The conditioning unit is configured to bring the carbon dioxide to a temperature of between 10°C and 35°C, in particular of between 15°C and 30°C, such as for example 20°C.

Evaporation and/or conditioning of the carbon dioxide may be effected in a relatively simple and efficient way if the device comprises a heat exchanger for bringing the gaseous carbon dioxide to the desired temperature. The heat exchanger may form part of the evaporation unit and/or the conditioning unit, and may be configured to evaporate the liquid carbon dioxide and/or to condition the gaseous carbon dioxide.

In an embodiment of said unclaimed device, the heat exchanger comprises a first heat-exchanging section which forms part of the evaporation unit and a second heat-exchanging section which forms part of the conditioning unit. In this way, the evaporating and conditioning function may be embodied in a relatively simple manner. In particular, it is thus possible to configure the first heat-exchanging section in such a way that it operates at a different temperature from the second heat-exchanging section. This is advantageous for the evaporation and subsequent conditioning of the carbon dioxide.

It has been found that a shell-and-plate-type heat exchanger is particularly efficient to evaporate and/or condition the carbon dioxide.

In an embodiment, the device comprises an energy source. The energy source may be used for the benefit of the heat exchanger. Since the device comprises the energy source, it is self-sufficient. No energy has to be provided at the location of the shed space in order to allow the device to operate.

According to a further aspect not covered by the claimed invention and present for illustration purposes only, the present disclosure comprises an arrangement provided with the device and a container for containing carbon dioxide, preferably for containing the liquid carbon dioxide. The advantages of the arrangement are analogous to the advantages of the device.

In an embodiment, the arrangement is provided with a displaceable frame, in which the device or the device and the container are provided on the displaceable frame. This is advantageous in order to be able to transport a part of the arrangement to a shed space in a practical way. Preferably, the displaceable frame is configured as a vehicle which can be towed by a towing vehicle, such as a trailer or semitrailer. This is advantageous in order to be able to transport a part of the arrangement in a practical way.

It is advantageous if the arrangement comprises detection means for detecting the temperature of the gaseous carbon dioxide introduced into the shed space and/or for detecting the temperature of the shed space. This is particularly advantageous to gas the birds relatively quickly and with relatively limited suffering.

It is advantageous if the arrangement furthermore comprises a control unit which is configured to control the arrangement for achieving the desired temperature of the gaseous carbon dioxide.

In this case, it is advantageous if the control unit is furthermore configured to control the arrangement for achieving the further desired temperature of the shed space. In this case, it is advantageous if the arrangement is provided with space-heating means in order to bring and/or keep the shed space at a further desired temperature.

Below, the disclosure will be explained with reference to the attached figures, which illustrate some embodiments of the present invention. In the figures:
Fig. 1 - shows a diagrammatic view of an arrangement for carrying out the method according to the present invention;
Fig. 2 - shows a diagrammatic view of an alternative arrangement for carrying out the method according to the present invention;
Fig. 3 - shows a diagrammatic view of a further alternative arrangement for carrying out the method according to the present invention;
Fig. 4 - shows a diagrammatic overview of details of a device not covered by the claimed invention.

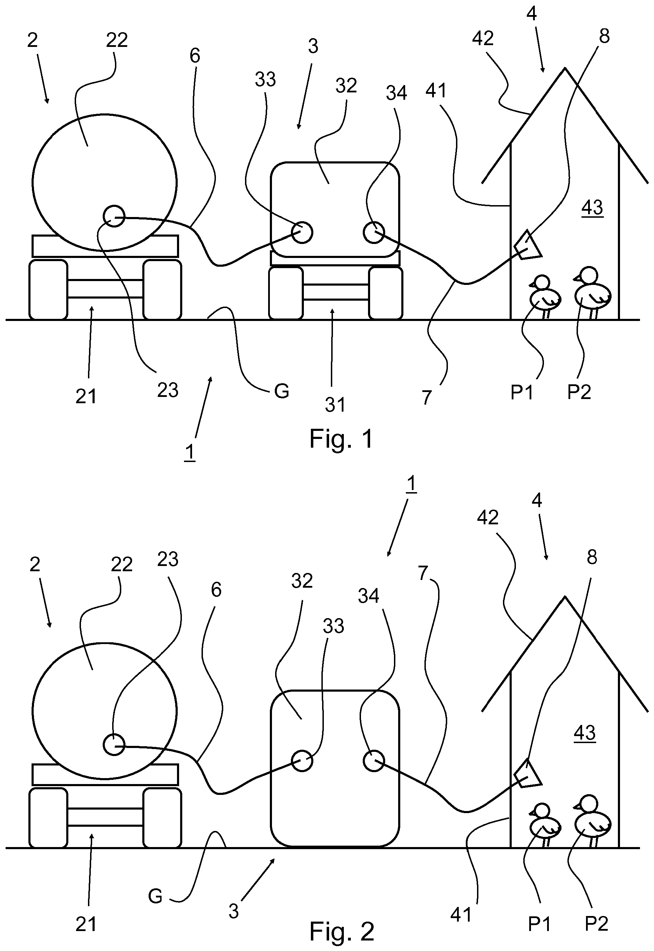

Fig. 1 shows a highly diagrammatic side view of an arrangement 1 for gassing poultry P1, P2. The poultry P1, P2 is in this case kept in a shed space 43 of an animal shed 4 which is positioned on a ground G. The animal shed 4 illustrated here comprises side walls 41 and a roof 42 which delimit the shed space 43. In order to gas the shed space 43 with carbon dioxide, it is advantageous if the shed space 43 can be closed off slightly or even substantially completely, so that the supplied carbon dioxide can accumulate in the shed space 43 in order to gas the birds P1, P2 present in the animal shed. Such closing off is known per se to those skilled in the art.

The arrangement 1 furthermore comprises a tanker 2. The tanker 2 comprises a displaceable frame 21 and a container 22 for containing liquid carbon dioxide. The tanker 2 is provided with a connection 23, via which liquid carbon dioxide can be supplied from the container 22. The carbon dioxide then has a temperature of approximately -25°C.

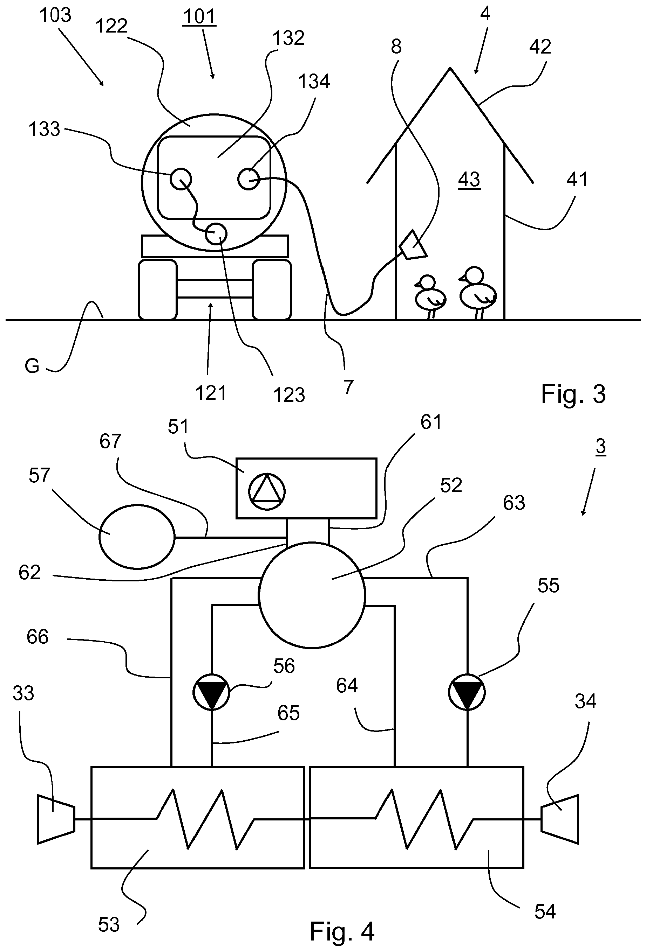

The arrangement 1 also comprises a device 3 which is configured for converting liquid carbon dioxide into gaseous carbon dioxide. In the illustrated embodiment, the device 3 comprises a displaceable frame 31, on which a conversion unit 32 is provided. In this conversion unit 32, components are provided for converting the liquid carbon dioxide into the gaseous carbon dioxide, as will be explained later for illustrative purposes with reference to Fig. 4. Fig. 1 shows that a supply 33 for the liquid carbon dioxide and a discharge 34 for the gaseous carbon dioxide are provided. The supply 33 is connected to the tanker 2 via a first line 6 in such a manner that cold liquid carbon dioxide can be supplied to the device 3. A second line 7 is connected to the discharge 34 of the device 3 and is positioned in the interior of the animal shed 4 and provided with a nozzle 8 for introducing gaseous carbon dioxide into the shed space. In practice, a distribution system is used instead of only a single nozzle 8, so that gaseous carbon dioxide can be introduced into the animal shed 4 at a number of locations. It will therefore be clear to those skilled in the art that the disclosure is not limited to the use of a single nozzle.

Using the arrangement 1 illustrated in Fig. 1, birds P1, P2 can be gassed in the following way. The tanker 2 and the device 3 are provided and placed in the vicinity of the animal shed 4. The tanker 2 is connected to the device 3 via line 6 by connecting the line 6 to the outlet 23 and the supply 33. The line 7 is connected to the discharge 34 of the device 3, and the end of the line 7 is introduced into the shed space 43. The device 3 can then be activated, in which case cold liquid carbon dioxide is supplied to the device 3, is converted into gaseous carbon dioxide in situ, and is then introduced into the interior of the animal shed 4, that is to say into the shed space 43, as gaseous carbon dioxide. The space 43 will be filled with gaseous carbon dioxide and as a result thereof, the birds P1, P2 will die. Preferably, the device 3 is furthermore used to condition, in particular to heat, the converted carbon dioxide to a temperature which substantially corresponds to the temperature in the shed space 43. To this end, the temperature of the shed space 43 may be measured, for example, or the current outside temperature may be used as a reference value in order to set a temperature on the basis thereof. In general, it is advantageous if the temperature is set to approximately between 10°C and 35°C, in particular between 15°C and 30°C, such as for example 20°C.

As can be seen from Fig. 1, the conversion of the liquid carbon dioxide into the gaseous carbon dioxide takes place outside the shed space. As has been mentioned above, this reduces the amount of noise in the shed space 43 during gassing.

Fig. 2 shows an alternative arrangement 1 which substantially corresponds to the arrangement from Fig. 1, but which substantially differs therefrom by the fact that the device 3 is not provided with a displaceable frame 31 here, in contrast to Fig. 1. A displaceable frame 31 as shown in Fig. 1 is advantageous per se, because the conversion unit 32 can then be placed relatively autonomously in a desired location. However, the device 3 as illustrated in Fig. 2 forms a separate unit here, which actually consists of the conversion unit 32 with the supply 33 and the discharge 34. This renders the conversion unit 32 less complicated and less costly. If desired, this separate conversion unit 32 may be taken to and positioned at the location of the animal shed 4 by means of a vehicle which is suitable for the purpose. Incidentally, reference is made to the description of Fig. 4 for an explanation of the conversion unit 32.

Fig. 3 shows a further alternative arrangement 101, in which use is made of a device 103 for supplying gaseous carbon dioxide to the shed space 43. The device 103 comprises a displaceable frame 121, on which a container 122 for liquid carbon dioxide is positioned. The conversion unit 132 is also positioned on the frame 121. The discharge 123 of the container 122 is connected to the inlet 133 of the conversion unit 132, the discharge 134 of the conversion unit 132 is passed to the shed space 43 via line 7. In fact, this embodiment provides an integrated displaceable container for liquid carbon dioxide with a conversion unit 132 for producing gaseous carbon dioxide.

Incidentally, it will be clear to those skilled in the art that the use of a displaceable frame 21, 31, 121 is advantageous per se, but that the disclosure is not limited to the use thereof. Embodiments of the arrangement 1, 101 which do not use one or more frames are also conceivable.

Fig. 4 shows a diagrammatic overview of the most important components of the device 3 illustrated in Figs. 1, 2 and 3. In general, this device 3 has a supply 33 for liquid carbon dioxide and a discharge 34 for gaseous carbon dioxide. These are normally situated on the exterior of the conversion unit 32, 132, the other components illustrated in Fig. 4 are then situated on the interior of the conversion unit 32, 132.

Fig. 4 shows that the device 3 comprises an energy source 51, in particular a heating boiler having a power rating of between 100 kW and 5000 kW. Fluid, in particular water, which has been heated by the energy source 51, may be transported from and to a buffer vessel 52 via lines 61, 62. The buffer vessel 52 is configured to store the fluid at a temperature between 20°C and 95°C. Between the boiler 51 and the buffer vessel 52, an expansion vessel 57 is provided which is connected via line 67.

From the buffer vessel, there is a first circuit (on the left in Fig. 4) which runs to a first heat-exchanging section 53 via line 65 and a pump unit 56 placed therein, and returns to the buffer vessel 52 via line 66. The first heat-exchanging section 53 is configured to evaporate liquid carbon dioxide at -25°C (that is to say turn it into a gas) and may thus be taken to be an evaporation unit 53. To this end, the fluid in line 65 is supplied to the first heat-exchanging section 53 at a temperature between approximately 20°C to approximately 95°C. After heating the carbon dioxide and converting it into gaseous carbon dioxide, the fluid is cooled down to approximately 1°C and will be returned to the buffer vessel 52 via line 66. By using the energy source 51, in this case the heating boiler 51, the buffer vessel 52 can again be brought to and kept at the desired storage temperature. The power of the energy source 51 is in this case set in such a manner that sufficient energy can be supplied to the fluid during use to keep the buffer vessel at the desired temperature and to continue the conversion of liquid carbon dioxide into gaseous carbon dioxide during continuous use of the device.

In summary, it can be stated that the first circuit with the first heat-exchanging section 53 is configured to convert liquid carbon dioxide into gaseous carbon dioxide.

The device 3 furthermore comprises a second circuit (on the right in Fig. 4) which supplies fluid from the buffer vessel 52 to a second heat-exchanging section 54 via line 63 and a pump unit 55, and returns the fluid to the buffer vessel 52 via line 64. The second heat-exchanging section 54 is configured to heat the gaseous carbon dioxide to a desired temperature, such as for example approximately 20°C. The second heat-exchanging section 54 can thus be taken to be a conditioning unit for bringing the gaseous carbon dioxide to a desired temperature.

In the embodiment illustrated in Fig. 4, the first heat-exchanging section 53 and the second heat-exchanging section 54 are formed by a heat exchanger. The first heat-exchanging section 53 and the second heat-exchanging section 54 are placed downstream of one another and coupled to each other. The sections 53, 54 may be configured to operate separately, but may also be configured to support each other. In a particular embodiment, this may be a shell-and-plate-type heat exchanger. Obviously, other heat exchangers are also conceivable.

The device may comprise a control unit which is known to those skilled in the art per se, in such a manner that the power of the energy source, the temperature of the buffer vessel and the fluid streams through the first circuit and the second circuit are automatically controlled.

The device according to the present disclosure makes it possible to work with a fixed capacity of tonnes of CO₂ per hour, in which the temperature in the shed space 43 can remain constant, contrary to the prior art, as a result of which animal welfare is not under threat. Also, there are no cold air streams in the space, as a result of which no escape behaviour is produced resulting in animals ending up in a heap and the heap containing surviving animals. In addition, as a result of supplying relatively warm gaseous carbon dioxide, there will be no drop in temperature in the shed space, so that no damage to equipment (e.g. water pipes) is caused, contrary to what is often the case when introducing liquid nitrogen into a space. In addition, the method of introducing gaseous CO₂ results in less noise, which in turn prevents escape behaviour.

By using this device 3, it is possible, for example, to achieve a content of 20% CO₂ in the shed space within 10 minutes after starting the supply of the gaseous CO₂. In any case, this content is already sufficient to render a large proportion of the birds unconscious or at least to stupefy the birds (comatose state). Furthermore, it is possible to further increase the content to 45% within 30 minutes, which is almost certainly lethal to the birds. In addition, the heat exchanger which is used makes it possible to ensure that the drop in temperature in the shed space during and after the introduction of gaseous CO₂ is not more than 10°C and thus helps to prevent discomfort for the animals to be killed.

An additional advantage of introducing gaseous CO₂ into the space at an equal temperature is that animals do not breath in a cold air mixture and are consequently not alerted to the fact that a change in the air mixture has taken place. In particular ducks, which are able to hold their breath for a prolonged period of time, and relatively young animals (chicks and < 2 weeks), which may start to breath shallowly (hyperventilate), are thus not alerted to a change, As soon as they take their first breath of gaseous CO₂, a lowering of the blood pH results, via the lungs, and consequently the brains are automatically given the signal to recover the drop in the pH level by taking more breaths, as a result of which the animal becomes trapped in an irreversible process. This means that birds and ages which could hitherto not be subjected to gassing in an animal shed, can now be killed by means of gassing in an animal shed. This additional advantage obviously already has a positive effect on wellbeing during the killing of adult birds. An additional advantage thereof is the fact that the space can be ventilated freely more quickly after the killing, as the introduced CO₂ was in gas form. When using liquid CO₂ according to the prior art, CO₂ will still be released over time, for example from ice deposits which have formed. By means of the method according to the present invention, an animal shed can thus be cleared sooner.

The applicant also found that the consumption is lower when using gaseous CO₂ than with liquid CO₂, which is introduced into a space and is then left to evaporate. According to the applicant, this is caused by the fact that, from a molecular point of view, gaseous CO₂ takes up a greater volume than a liquid form. Thus, the same volume percentage can be achieved using fewer kilograms of CO₂.

The method as described above can in principle also be used for other animals which are kept in a shed space, such as for example pigs, calves or other farm animals.

According to the present invention, gaseous carbon dioxide is supplied to the animal shed. This at least means direct introduction of carbon dioxide in a gaseous phase. This also includes the use of any additives. Thus, it is conceivable for the gaseous carbon dioxide to be used in the production of a foam, with the foam subsequently being introduced into the shed space. Supplying a foam mixture in this way forms part of the inventive idea.

The requested protection is defined by the attached claims.

## Claims

1. Method for gassing poultry (P1, P2), in which the poultry (P1, P2) is present in a shed space (43) for keeping poultry, in which the method comprises the successive steps of:
- providing liquid carbon dioxide,
- converting the liquid carbon dioxide into the gaseous carbon dioxide,
- bringing the gaseous carbon dioxide to a desired temperature, and
- subsequently introducing the gaseous carbon dioxide into the shed space (43),
**characterised in that** said desired temperature is between 10°C and 35°C and **in that** the gaseous carbon dioxide is introduced into the shed space (43) at a pressure in the range from 2 bar to 4 bar, preferably at a pressure in the range from 2 bar to 3 bar.

2. Method according to Claim 1, in which the desired temperature is adapted to an average animal shed temperature, preferably in which the desired temperature is equal to the average animal shed temperature.

3. Method according to one of the preceding claims, the method further comprising the step of bringing and/or keeping the shed space (43) at a further desired temperature, in which the further desired temperature is between 10°C and 35°C, preferably in which the further desired temperature is substantially equal to the desired temperature.

4. Method according to any of the preceding claims, in which the gaseous carbon dioxide is distributed over the volume of the shed space (43) in the shed space substantially evenly.

5. Method according to any of the preceding claims, in which the shed space is formed by an aviary barn, in which the poultry can move freely through the shed space (43) in the vertical direction.

6. Method according to one of the preceding claims, in which the method comprises the step of removing the gaseous carbon dioxide from the shed space (43), preferably in which the gaseous carbon dioxide is removed from the shed space (43) after a time period in the range from 30 minutes to 2 hours after the introduction of the gaseous carbon dioxide, more preferably in which the gaseous carbon dioxide is removed from the shed space (43) after a time period in the range from 31 minutes to 60 minutes after the introduction of the gaseous carbon dioxide.

## Patentansprüche

1. Verfahren zur Vergasung von Geflügel (P1, P2), wobei sich das Geflügel (P1, P2) in einem Stallraum (43) zur Geflügelhaltung befindet, wobei das Verfahren die aufeinanderfolgenden Schritte umfasst:
- Bereitstellen von flüssigem Kohlendioxid,
- Umwandeln des flüssigen Kohlendioxids in gasförmiges Kohlendioxid,
- Bringen des gasförmigen Kohlendioxids auf eine gewünschte Temperatur und
- anschließend Einführen des gasförmigen Kohlendioxids in den Stallraum (43),
**dadurch gekennzeichnet, dass** die gewünschte Temperatur zwischen 10 °C und 35 °C beträgt und dass das gasförmige Kohlendioxid mit einem Druck in dem Bereich von 2 bar bis 4 bar, vorzugsweise mit einem Druck in dem Bereich von 2 bar bis 3 bar, in den Stallraum (43) eingeführt wird.

2. Verfahren gemäß Anspruch 1, wobei die gewünschte Temperatur auf eine mittlere Tierstalltemperatur eingestellt wird, wobei die gewünschte Temperatur vorzugsweise gleich der mittleren Tierstalltemperatur ist.

3. Verfahren gemäß einem der vorstehenden Ansprüche, wobei das Verfahren ferner den Schritt des Bringens und/oder Haltens des Stallraums (43) auf eine weitere gewünschte/bei einer weiteren gewünschten Temperatur umfasst, wobei die weitere gewünschte Temperatur zwischen 10 °C und 35 °C beträgt, wobei die weitere gewünschte Temperatur vorzugsweise im Wesentlichen gleich der gewünschten Temperatur ist.

4. Verfahren gemäß einem der vorstehenden Ansprüche, wobei das gasförmige Kohlendioxid im Wesentlichen gleichmäßig über das Volumen des Stallraums (43) in dem Stallraum verteilt wird.

5. Verfahren gemäß einem der vorstehenden Ansprüche, wobei der Stallraum von einem Vogelhaus gebildet wird, in dem sich das Geflügel in der senkrechten Richtung frei durch den Stallraum (43) bewegen kann.

6. Verfahren gemäß einem der vorstehenden Ansprüche, wobei das Verfahren den Schritt des Entfernens des gasförmigen Kohlendioxids aus dem Stallraum (43) umfasst, wobei das gasförmige Kohlendioxid vorzugsweise nach einem Zeitraum in dem Bereich von 30 Minuten bis 2 Stunden nach dem Einführen des gasförmigen Kohlendioxids aus dem Stallraum (43) entfernt wird, wobei das gasförmige Kohlendioxid weiter bevorzugt nach einem Zeitraum in dem Bereich von 31 Minuten bis 60 Minuten nach dem Einführen des gasförmigen Kohlendioxids aus dem Stallraum (43) entfernt wird.

## Revendications

1. Procédé de gazage de volailles (P1, P2), dans lequel les volailles (P1, P2) sont présentes dans un espace de hangar (43) pour garder des volailles, dans lequel le procédé comprend les étapes successives consistant à :
- fournir du dioxyde de carbone liquide,
- convertir le dioxyde de carbone liquide en dioxyde de carbone gazeux,
- amener le dioxyde de carbone gazeux à une température souhaitée, et
- ensuite introduire le dioxyde de carbone gazeux dans l'espace de hangar (43),
**caractérisé en ce que** ladite température souhaitée est comprise entre 10°C et 35°C et **en ce que** le dioxyde de carbone gazeux est introduit dans l'espace de hangar (43) à une pression se trouvant dans la plage allant de 2 bars à 4 bars, de préférence à une pression se trouvant dans la plage allant de 2 bars à 3 bars.

2. Procédé selon la revendication 1, dans lequel la température souhaitée est adaptée à une température moyenne de hangar pour animaux, de préférence dans lequel la température souhaitée est égale à la température moyenne de hangar pour animaux.

3. Procédé selon l'une des revendications précédentes, le procédé comprenant en outre l'étape consistant à amener et/ou maintenir l'espace de hangar (43) à une température souhaitée supplémentaire, où la température souhaitée supplémentaire est comprise entre 10°C et 35°C, de préférence où la température souhaitée supplémentaire est sensiblement égale à la température souhaitée.

4. Procédé selon l'une des revendications précédentes, dans lequel le dioxyde de carbone gazeux est réparti sensiblement uniformément sur le volume de l'espace de hangar (43) dans l'espace de hangar.

5. Procédé selon l'une des revendications précédentes, dans lequel l'espace de hangar est formé par une volière, dans lequel les volailles peuvent se déplacer librement à travers l'espace de hangar (43) dans la direction verticale.

6. Procédé selon l'une des revendications précédentes, dans lequel le procédé comprend l'étape consistant à retirer le dioxyde de carbone gazeux de l'espace de hangar (43), de préférence dans lequel le dioxyde de carbone gazeux est retiré de l'espace de hangar (43) après une période de temps se trouvant dans la plage allant de 30 minutes à 2 heures après l'introduction du dioxyde de carbone gazeux, plus préférablement dans lequel le dioxyde de carbone gazeux est retiré de l'espace de hangar (43) après une période de temps se trouvant dans la plage allant de 31 minutes à 60 minutes après l'introduction du dioxyde de carbone gazeux.
